(19) Europäisches Patentamt / European Patent Office / Office européen des brevets

(11) **EP 4 513 873 A1**

(12) **EUROPEAN PATENT APPLICATION**
published in accordance with Art. 153(4) EPC

(43) Date of publication:
26.02.2025 Bulletin 2025/09

(21) Application number: 23792198.6

(22) Date of filing: 20.04.2023

(51) International Patent Classification (IPC):
H04N 19/593 (2014.01)    H04N 19/176 (2014.01)
H04N 19/11 (2014.01)    H04N 19/132 (2014.01)
H04N 19/70 (2014.01)

(52) Cooperative Patent Classification (CPC):
H04N 19/11; H04N 19/132; H04N 19/176;
H04N 19/593; H04N 19/70

(86) International application number:
PCT/KR2023/005372

(87) International publication number:
WO 2023/204624 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.04.2022 KR 20220049153

(71) Applicant: LG Electronics Inc.
Yeongdeungpo-gu
Seoul 07336 (KR)

(72) Inventors:
• CHOI, Jangwon
  Seoul 06772 (KR)
• LIM, Jaehyun
  Seoul 06772 (KR)
• YOO, Sunmi
  Seoul 06772 (KR)
• CHOI, Jungah
  Seoul 06772 (KR)

(74) Representative: Maikowski & Ninnemann
Patentanwälte Partnerschaft mbB
Postfach 15 09 20
10671 Berlin (DE)

(54) **METHOD AND DEVICE FOR ENCODING/DECODING IMAGE ON BASIS OF CONVOLUTIONAL CROSS-COMPONENT MODEL (CCCM) PREDICTION, AND RECORDING MEDIUM FOR STORING BITSTREAM**

(57)    An image encoding/decoding method and apparatus are provided. The image decoding method may comprise deriving a convolutional cross-component model (CCCM) coefficient based on an intra prediction mode of a current chroma block being a CCCM mode, determining a co-located luma sample in a co-located luma block corresponding to a current chroma sample in the current chroma block and neighboring luma samples of the co-located luma sample, deriving at least one representative neighboring luma sample based on the neighboring luma samples, and generating a prediction sample of the current chroma sample based on the representative neighboring luma sample and the CCCM coefficient.

FIG. 12

```
         START
           |
           |                    S1210
  DERIVE CCCM COEFFICIENT
           |
           |                    S1220
  DETERMINE CO-LOCATED LUMA SAMPLE
   AND NEIGHBORING LUMA SAMPLES
           |
           |                    S1230
  DERIVE AT LEAST ONE REPRESENTATIVE
      NEIGHBORING LUMA SAMPLE
           |
           |                    S1240
  GENERATE PREDICTION SAMPLE
   OF CURRENT CHROMA SAMPLE
           |
          END
```

EP 4 513 873 A1

## Description

### Technical Field

The present disclosure relates to an image encoding/decoding method and apparatus and a recording medium for storing a bitstream, and, more particularly, to an image encoding/decoding method and apparatus based on convolutional cross-component model (CCCM) intra prediction and a recording medium for storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide an image encoding/decoding method and apparatus that perform convolutional cross-component model (CCCM) prediction.

In addition, an object of the present disclosure is to provide an image encoding/decoding method and apparatus that efficiently calculate a CCCM coefficient.

In addition, an object of the present disclosure is to provide an image encoding/decoding method and apparatus that perform improved CCCM prediction.

In addition, an object of the present disclosure is to provide an image encoding/decoding method and apparatus that perform CCCM prediction for each chroma screen/between chroma screens.

In addition, an object of the present disclosure is to provide an image encoding/decoding method and apparatus that perform CCCM prediction using a multi-model.

In addition, an object of the present disclosure is to provide a non-transitory computer-readable recording medium storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, the image decoding method performed by an image decoding apparatus may comprise deriving a convolutional cross-component model (CCCM) coefficient based on an intra prediction mode of a current chroma block being a CCCM mode, determining a co-located luma sample in a co-located luma block corresponding to a current chroma sample in the current chroma block and neighboring luma samples of the co-located luma sample, deriving at least one representative neighboring luma sample based on the neighboring luma samples, and generating a prediction sample of the current chroma sample based on the representative neighboring luma sample and the CCCM coefficient.

According to an embodiment of the present disclosure, the neighboring luma samples may include at least one of left, right, top, bottom, top-left, top-right, bottom-left or bottom-right neighboring luma samples of the co-located luma sample.

According to an embodiment of the present disclosure, the representative neighboring luma sample may be derived based on an average of the neighboring luma samples.

According to an embodiment of the present disclosure, the representative neighboring luma sample may be derived by downsampling using the co-located luma sample and the neighboring luma samples.

According to an embodiment of the present disclosure, the determination of the neighboring luma samples and the derivation of the representative neighboring luma sample may be performed based on side information signaled through a bitstream.

According to an embodiment of the present disclosure, the representative neighboring luma sample may include a top representative neighboring luma sample, a bottom representative neighboring luma sample, a left representative neighboring luma sample, and a right representative neighboring luma sample of the co-located luma sample, the top representative neighboring luma sample may be derived based on at least one neighboring luma sample adj acent to the top of the co-located luma sample, the bottom neighboring luma sample may be derived based on at least one neighboring luma sample adjacent to the bottom of the co-located luma sample, the left representative neighboring luma sample may be derived based on at least one neighboring luma sample adjacent to the left of the co-located luma sample, and the right representative neighboring luma sample may be derived based on at least one neighboring luma sample adjacent to the right of the co-located luma sample.

According to an embodiment of the present disclosure, the representative neighboring luma sample may include a horizontal representative neighboring luma samples, a vertical representative neighboring luma sample, a diagonal representative neighboring luma sample and an anti-angle representative neighboring luma sample, the horizontal representative neighboring luma sample may be derived based on at least one neighboring luma sample horizontally adjacent to the co-located luma sample, the vertical representative neighboring luma sample may be derived based on at least one neighboring luma sample vertically adjacent to the co-located luma sample, the diagonal representative neighboring luma sample may be derived based on at least one neighboring luma sample diagonally adjacent to the co-located luma sample, and the anti-diagonal representative neighboring luma sample may be derived based on at least one neighboring luma sample anti-diagonally adjacent to the co-located luma sample

According to an embodiment of the present disclosure, the current chroma block may include a first chroma block and a second chroma block, and the CCCM coefficient for the first chroma block may be derived independently from the CCCM coefficient for the second chroma block.

According to an embodiment of the present disclosure, the current chroma block may include a first chroma block and a second chroma block, CCCM prediction for the first chroma block may be performed based on the co-located luma block, and CCCM prediction for the second chroma block may be performed based on the first chroma block.

According to an embodiment of the present disclosure, the deriving the CCCM coefficient may comprise determining a reference sample area and deriving a CCCM coefficient using at least one reference sample in the reference sample area, and the reference sample area may be determined based on information about a CCCM mode.

According to an embodiment of the present disclosure, the CCCM mode may include a first mode and a second mode, the first mode may be a mode that uses only an area adjacent to the top of the current chroma block and the co-located luma block as the reference sample area, and the second mode may be a mode that uses only an area adjacent to the left of the current chroma block and the co-located luma block as the reference sample area.

According to an embodiment of the present disclosure, the deriving the CCCM coefficient may comprise determining a reference sample area, determining a CCCM model of one of two or more CCCM models based on at least one reference sample in the reference sample area and deriving a CCCM coefficient for the determined CCCM model.

According to an embodiment of the present disclosure, the determining the CCCM model may be performed based on a comparison between an average of at least one reference sample in the reference sample area and a predetermined threshold.

According to an embodiment of the present disclosure, an image encoding method performed by an image encoding apparatus may comprise deriving a convolutional cross-component model (CCCM) coefficient based on an intra prediction mode of a current chroma block being a CCCM mode, determining a co-located luma sample in a co-located luma block corresponding to a current chroma sample in the current chroma block and neighboring luma samples of the co-located luma sample, deriving at least one representative neighboring luma sample based on the neighboring luma samples, and generating a prediction sample of the current chroma sample based on the representative neighboring luma sample and the CCCM coefficient.

According to an embodiment of the present disclosure, a method of transmitting a bitstream generated by an image encoding method may comprise deriving a convolutional cross-component model (CCCM) coefficient based on an intra prediction mode of a current chroma block being a CCCM mode, determining a co-located luma sample in a co-located luma block corresponding to a current chroma sample in the current chroma block and neighboring luma samples of the co-located luma sample, deriving at least one representative neighboring luma sample based on the neighboring luma samples, and generating a prediction sample of the current chroma sample based on the representative neighboring luma sample and the CCCM coefficient.

**Advantageous Effects**

According to the present disclosure, it is possible to provide an image encoding/decoding method and apparatus with improved encoding/decoding efficiency.

Also, according to the present disclosure, it is possible to provide an image encoding/decoding method and apparatus that perform convolutional cross-component model (CCCM) intra prediction.

Also, according to the present disclosure, it is possible to provide an image encoding/decoding method and apparatus that efficiently calculate a CCCM coefficient.

Also, according to the present disclosure, it is possible to provide an image encoding/decoding method and apparatus that perform improved CCCM prediction.

Also, according to the present disclosure, it is possible to provide an image encoding/decoding method and apparatus that perform CCCM prediction for each chroma screen/between chroma screens.

Also, according to the present disclosure, it is possible to provide an image encoding/decoding method and apparatus that perform CCCM prediction using a multi-model.

Also, according to the present disclosure, it is possible to provide a non-transitory computer-readable recording medium storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a flowchart illustrating an intra prediction based video/image encoding method.

FIG. 5 is a view illustrating a configuration of the intra prediction unit according to the present disclosure.

FIG. 6 is a flowchart illustrating an intra prediction based video/image decoding method.

FIG. 7 is a view illustrating a configuration of the intra prediction unit according to the present disclosure.

FIG. 8 is a diagram showing multi-reference line for intra prediction according to an embodiment of the present disclosure.

FIG. 9 is a diagram illustrating a co-located luma sample and neighboring luma samples according to an embodiment of the present disclosure.

FIG. 10 is a diagram illustrating a reference sample area of a chroma block according to an embodiment of the present disclosure.

FIG. 11 is a diagram illustrating a current chroma block and a co-located luma block for CCCM prediction according to an embodiment of the present disclosure.

FIG. 12 is a flowchart illustrating a CCCM prediction method according to an embodiment of the present disclosure..

FIG. 13 is a diagram illustrating a chroma block and a luma block for CCCM prediction according to an embodiment of the present disclosure.

FIG. 14 is a flowchart of a CCCM coefficient derivation method according to an embodiment of the present disclosure.

FIG. 15 is a diagram illustrating a reference sample area according to an embodiment of the present disclosure.

FIG. 16 is a flowchart of a CCCM coefficient derivation method according to another embodiment of the present disclosure.

FIG. 17 is a view showing a content streaming system to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

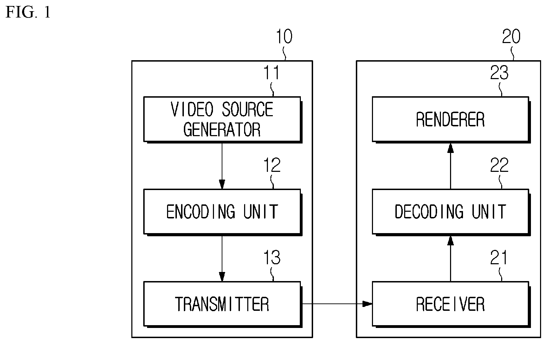

FIG. 1 is a view schematically showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoder 12 and a transmitter 13. The decoding device 20 according to an embodiment may include a receiver 21, a decoder 22 and a renderer 23. The encoder 12 may be called a video/image encoding apparatus, and the decoder 22 may be called a video/image decoding apparatus. The transmitter 13 may be included in the encoder 12. The receiver 21 may be included in the decoder 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoder 12 may encode an input video/image. The encoder 12 may perform a series of procedures such as prediction, transform, and quantization for compression and coding efficiency. The encoder 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a separate transmission device from the encoder 120. In this case, the transmission device includes at least one processor that acquires encoded video/image information or data output in the form of a bitstream and a transmitter that delivers it in the form of a file or streaming. The receiver 21 may extract/receive the bitstream from the storage medium or network and transmit the bitstream to the decoder 22.

The decoder 22 may decode the video/image by performing a series of procedures such as dequantization, inverse transform, and prediction corresponding to the operation of the encoder 12.

The renderer 23 may render the decoded video/image. The rendered video/image may be displayed through the display.

## Overview of image encoding apparatus

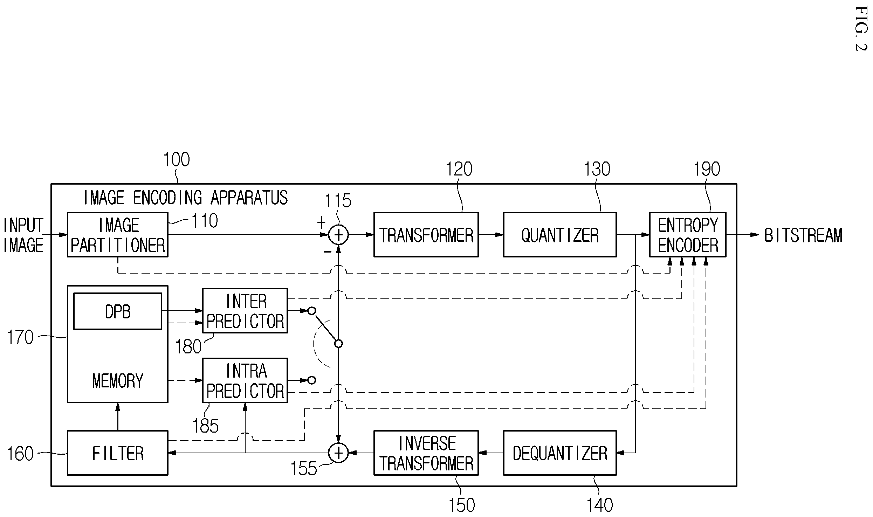

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QTBT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, as described below, luma mapping with chroma scaling (LMCS) is applicable in a picture encoding process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

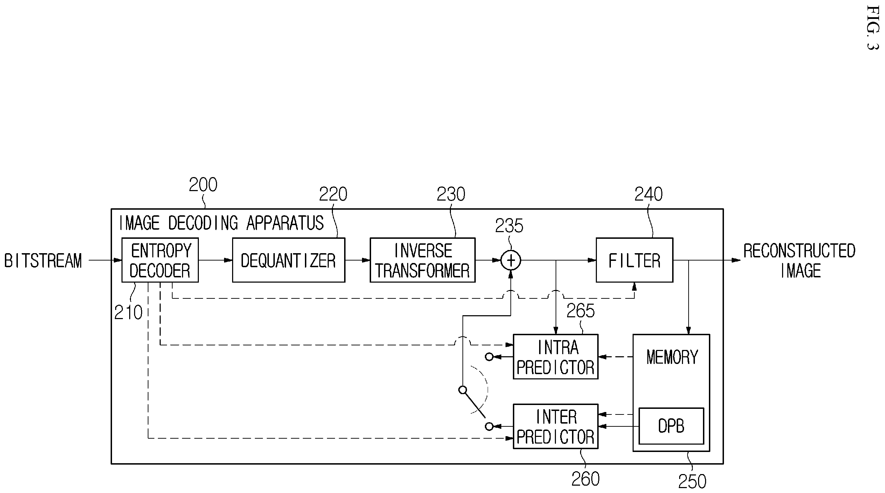

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

### Overview of intra prediction

Hereinafter, intra prediction according to the present disclosure will be described.

Intra prediction may represent prediction for generating prediction samples for a current block based on reference samples in a picture to which a current block belongs (hereinafter referred to as a current picture). When intra prediction applies to a current block, neighboring reference samples to be used for intra prediction of the current block may be derived. The neighboring reference samples of the current block may include a total of 2xnh samples neighbor/adjacent to a left boundary of the current block having a size of nWxnH and samples adjacent to a bottom-left, a total of 2xnW samples adjacent to a top boundary of the current block and samples adjacent to a top-right, and one sample adjacent to a top-left of the current block. Alternatively, the neighboring reference samples of the current block may include a plurality of columns of top neighboring samples and a plurality of rows of left neighboring samples. In addition, the neighboring reference samples of the current block may include a total of nH samples adjacent to a right boundary of the current block having a size of nWxnH, a total of nW samples adjacent to a bottom boundary of the current block and one sample adjacent to a bottom-right of the current block.

However, some of the neighboring reference samples of the current block have not yet been decoded or may not be available. In this case, the decoder may construct neighboring reference samples to be used for prediction by substituting unavailable samples with available samples. Alternatively, neighboring reference samples to be used for prediction may be constructed through interpolation of available samples.

When the neighboring reference samples are derived, (i) a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode.

Also, the prediction sample may be generated through interpolation of the first neighboring sample positioned in the prediction direction of the intra prediction mode of the current block based on the prediction target sample of the current block among the neighboring reference samples and the second neighboring sample positioned in the opposite direction thereof. The above-described case may be referred to as linear interpolation intra prediction (LIP).

In addition, chroma prediction samples may be generated based on luma samples using a linear model. This case may be called an LM (linear model) mode.

In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC).

In addition, a reference sample line with the highest prediction accuracy is selected from among multiple neighboring reference sample lines of the current block, to derive the prediction sample using the reference sample located in the prediction direction in the corresponding line, and, at this time, information on the used reference sample line (e.g., intra_luma_ref_idx) may be encoded in a bitstream and signaled. This case may be referred to as multi-reference line (MRL) intra prediction or MRL-based intra prediction. When MRL is not applied, reference samples may be derived from reference sample lines directly adjacent to the current block and in this case, information on the reference sample lines may not be signaled.

In addition, the current block may be partitioned into vertical or horizontal sub-partitions and intra prediction may be performed based on the same intra prediction mode for each subpartition. In this case, the neighboring reference samples of the intra prediction may be derived in units of sub-partitions. That is, the reconstructed sample of the previous sub-partition in the encoding/decoding order may be used as the neighboring reference sample of the current sub-partition. In this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction.

These intra prediction techniques may be called an intra prediction type or additional intra prediction mode to be distinguished from a direction or non-directional intra prediction mode. The intra prediction technique (intra prediction type, additional intra prediction mode, etc.) may be referred to as various terms such as an intra prediction technique or an additional intra prediction mode. For example, the intra prediction type (or additional intra prediction mode, etc.) may include at least one of the aforementioned LIP, LM, PDPC, MRL or ISP. A general intra prediction method excluding a specific intra prediction type such as LIP, LM, PDPC, MRL, and ISP may be referred to as a normal intra prediction type. The normal intra prediction type may be generally applied when the above specific intra prediction type is not applied, and prediction may be performed based on the above-described intra prediction mode. Meanwhile, if necessary, post-processing filtering may be performed on the derived prediction sample.

Specifically, the intra prediction procedure may include an intra prediction mode/type determination step, a neighboring reference sample derivation step, and an intra prediction mode/type based prediction sample derivation step. In addition, if necessary, a post-filtering step may be performed on the derived prediction sample.

Meanwhile, in addition to the above-described intra prediction types, affine linear weighted intra prediction (ALWIP) may be used. The ALWIP may be referred to as linear weighted intra prediction (LWIP) or matrix weighted intra prediction or matrix based intra prediction (MIP). If the MIP is applied to the current block, i) neighboring reference samples on which an averaging procedure has been performed is used, ii) matrix-vector-multiplication procedure is performed, and iii) a horizontal/vertical interpolation procedure is further performed to derive prediction samples for the current block as necessary. The intra prediction modes used for the MIP may be configured to be different from the intra prediction modes used in the LIP, PDPC, MRL, ISP intra prediction or normal intra prediction. The intra prediction mode for the MIP may be called a MIP intra prediction mode, a MIP prediction mode, or a MIP mode. For example, a matrix and offset used in the matrix vector multiplication may be set differently according to the intra prediction mode for the MIP. Here, the matrix may be called a (MIP) weighting matrix, and the offset may be called a (MIP) offset vector or a (MIP) bias vector. A specific MIP method will be described later.

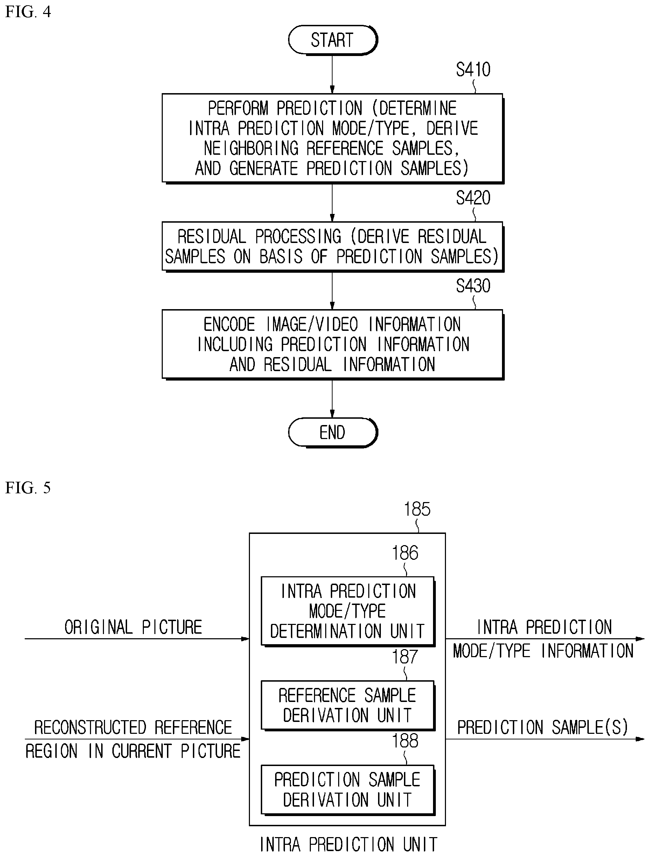

The block reconstruction procedure based on intra prediction and the intra prediction unit in the encoding apparatus will be described later with reference to FIGS. 4 and 5.

FIG. 4 is a flowchart illustrating an intra prediction based video/image encoding method.

The encoding method of FIG. 4 may be performed by the image encoding apparatus of FIG. 2. Specifically, step S410 may be performed by the intra prediction unit 185 and step S420 may be performed by the residual processor. Specifically, step S420 may be performed by the subtractor 115. Step S430 may be performed by the entropy encoder 190. The prediction information of step S430 may be derived by the intra prediction unit 185, and the residual information of step S430 may be derived by the residual processor. The residual information is information on residual samples. The residual information may include information on quantized transform coefficients for the residual samples. As described above, the residual samples may be derived as transform coefficients through the transformer 120 of the encoding apparatus, and the transform coefficients may be derived as quantized transform coefficients through the quantizer 130. Information on the quantized transform coefficients may be encoded by the entropy encoder 190 through a residual coding procedure.

The image encoding apparatus may perform intra prediction with respect to the current block (S410). The image encoding apparatus may derive an intra prediction mode/type for the current block, derive neighboring reference samples of the current block, and generate prediction samples in the current block based on the intra prediction mode/type and the neighboring reference samples. Here, a procedure for determining an intra prediction mode/type, a procedure for deriving neighboring reference samples and a procedure for generating prediction samples may be simultaneously performed, or any one procedure may be performed before another procedure.

FIG. 5 is a view illustrating a configuration of the intra prediction unit 185 according to the present disclosure.

As shown in FIG. 5, the intra prediction unit 185 of the encoding apparatus may include an intra prediction mode/type determination unit 186, a reference sample derivation unit 187, a prediction sample derivation unit 188. The intra prediction mode/type determination unit 186 may determine the intra prediction mode/type for the current block, the reference sample derivation unit 187 may derive neighboring reference samples of the current block, and the prediction sample derivation unit 188 may derive the prediction samples of the current block. Meanwhile, although not shown, when the below-described prediction sample filtering procedure is performed, the intra prediction unit 185 may further include a prediction sample filter (not shown).

The image encoding apparatus may determine a mode/type applied to the current block from among a plurality of intra prediction modes/types. The encoding apparatus may compare RD costs of the intra prediction modes/types and determine an optimal intra prediction mode/type for the current block.

Meanwhile, the image encoding apparatus may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

Referring to FIG. 4 again, the image encoding apparatus may generate residual samples for the current block based on prediction samples or filtered prediction samples (S420). The image encoding apparatus may derive the residual samples by subtracting the prediction samples from the original samples of the current block. That is, the image encoding apparatus may derive the residual sample value by subtracting the prediction sample value from the original sample value.

The image encoding apparatus may encode image information including information on intra prediction (prediction information) and residual information of the residual samples (S430). The prediction information may include the intra prediction mode information and the intra prediction type information. The encoding apparatus may output encoded image information in the form of a bitstream. The output bitstream may be transmitted to the decoding apparatus through a storage medium or a network.

The residual information may include a residual coding syntax described below. The encoding apparatus may transform/quantize the residual samples to derive quantized transform coefficients. The residual information may include information on the quantized transform coefficients.

Meanwhile, as described above, the image encoding apparatus may generate a reconstructed picture (including reconstructed samples and a reconstructed block). To this end, the encoding apparatus may perform dequantization/inverse transform with respect to the quantized transform coefficients again to derive (modified) residual samples. The residual samples are transformed/quantized and then dequantized/inversely transformed, in order to derive the same residual samples as the residual samples derived in the decoding apparatus as described above. The image encoding apparatus may generate a reconstructed block including the reconstructed samples for the current block based on the prediction samples and the (modified) residual samples. A reconstructed picture for the current picture may be generated based on the reconstructed block. As described above, an in-loop filtering procedure is further applicable to the reconstructed picture.

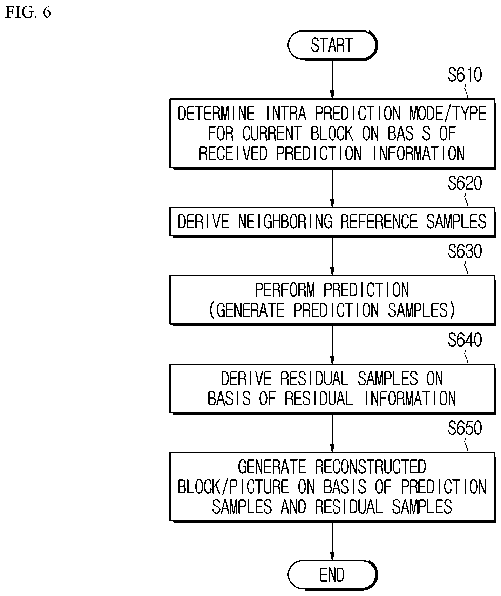

FIG. 6 is a flowchart illustrating an intra prediction based video/image decoding method.

The image decoding apparatus may perform operation corresponding to operation performed by the image encoding apparatus.

The decoding method of FIG. 6 may be performed by the image decoding apparatus of FIG. 3. S610 to S630 may be performed by the intra prediction unit 265 of the decoding apparatus, and the prediction information of S610 and the residual information of S640 may be obtained from the bitstream by the entropy decoder 210 of the decoding apparatus. The residual processor of the image decoding apparatus may derive the residual samples for the current block based on the residual information (S640). Specifically, the dequantizer 220 of the residual processor may perform dequantization based on quantized transform coefficients derived based on the residual information to derive transform coefficients, and the dequantizer 230 of the residual processor may perform inverse transform with respect to the transform coefficients to derive the residual samples for the current block. Step S650 may be performed by the adder 235 or the reconstructor of the decoding apparatus.

Specifically, the image decoding apparatus may derive a intra prediction mode/type for the current block based on the received prediction information (intra prediction mode/type information) (S610). The image decoding apparatus may derive neighboring reference samples of the current block (S620). The image decoding apparatus may generate prediction samples in the current blocks based on the intra prediction mode/type and the neighboring reference samples (S630). In this case, the image decoding apparatus may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

The image decoding apparatus generates residual samples for the current block based on the received residual information (S640). The image decoding apparatus may generate reconstructed samples for the current block based on the prediction samples and the residual samples, and derive a reconstructed block including the reconstructed samples (S650). A reconstructed picture for the current picture may be generated based on the reconstructed block. As described above, the in-loop filtering procedure is further applicable to the reconstructed picture.

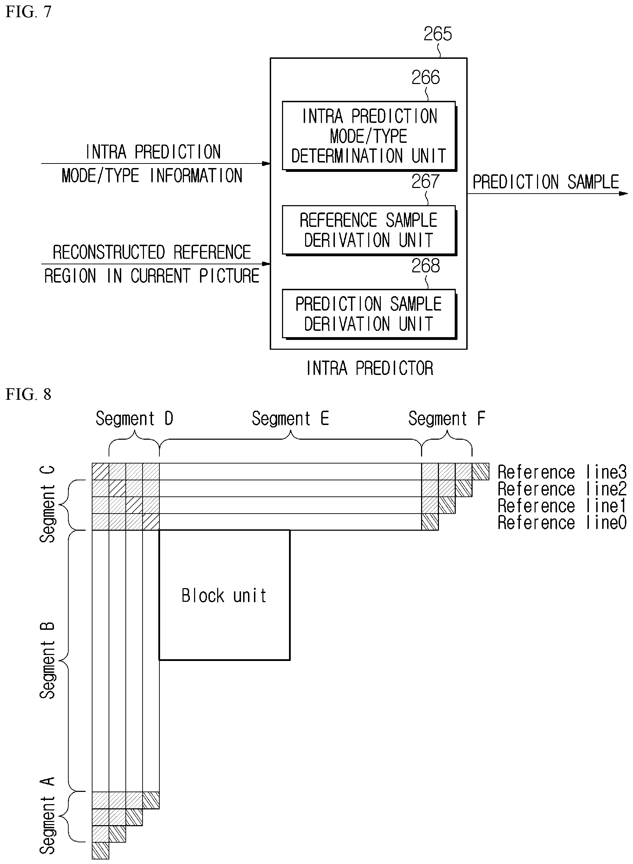

FIG. 7 is a view illustrating a configuration of the intra prediction unit 265 according to the present disclosure.

As shown in FIG. 7, the intra prediction unit 265 of the image decoding apparatus may include an intra prediction mode/type determination unit 266, a reference sample derivation unit 267 and a prediction sample derivation unit 268, the intra prediction mode/type determination unit 266 may determine the intra prediction mode/type for the current block based on the intra prediction mode/type information obtained by the intra prediction mode/type determination unit 186 of the image encoding apparatus, the reference sample derivation unit 266 may derive the neighboring reference samples of the current block, and the prediction sample derivation unit 268 may derive the prediction samples of the current block. Meanwhile, although not shown, when the above-described prediction sample filtering procedure is performed, the intra prediction unit 265 may further include a prediction sample filter (not shown).

The intra prediction mode information may include flag information (e.g., intra_luma_mpm_flag) specifying whether a most probable mode (MPM) or a remaining mode applies to the current block, and, when the MPM applies to the current block, the intra prediction mode information may further include index information (e.g., intra_luma_mpm_idx) specifying one of intra prediction mode candidates (MPM candidates). The intra prediction mode candidates (MPM candidates) may be configured as an MPM candidate list or an MPM list. In addition, when the MPM does not apply to the current block, the intra prediction mode information may further include remaining mode information (e.g., intra_luma_mpm_remainder) specifying one of the remaining intra prediction modes excluding the intra prediction mode candidates (MPM candidates). The decoding apparatus may determine the intra prediction mode of the current block based on the intra prediction mode information.

In addition, the intra prediction technique information may be implemented in various forms. For example, the intra prediction technique information may include intra prediction technique index information specifying one of the intra prediction techniques. As another example, the intra prediction technique information may include at least one of reference sample line information (e.g., intra_luma_ref_idx)) specifying whether the MRL applies to the current block and which reference sample line is used if applied, ISP flag information (e.g., intra _subpartitions_mode_flag) specifying whether the ISP applies to the current block, ISP type information (e.g., intra_subpartitions_split_flag) specifying the split type of subpartitions when the ISP applies, flag information specifying whether PDPC applies or flag information specifying whether LIP applies. In addition, the intra prediction type information may include an MIP flag specifying whether MIP is applied to the current block. In the present disclosure, the ISP flag information may be referred to as an ISP application indicator.

The intra prediction mode information and/or the intra prediction type information may be encoded/decoded through the coding method described in the present disclosure. For example, the intra prediction mode information and/or the intra prediction type information may be encoded/decoded through entropy coding (e.g., CABAC or CAVLC) based on truncated (rice) binary code.

Meanwhile, the intra prediction mode may further include a cross-component linear model (CCLM) mode for chroma samples in addition to the PLANAR mode, DC mode and angular intra prediction modes. The CCLM mode may be split into L_CCLM, T_CCLM, LT_CCLM according to whether left samples, top samples or both thereof is considered for CCLM parameter derivation and may apply only to a chroma component.

The intra prediction mode may be indexed, for example, as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA L_CCLM, INTRA T_CCLM |

Meanwhile, the intra prediction type (or additional intra prediction mode) may include at least one of the LIP, PDPC, MRL, ISP or MIP. The intra prediction type may be indicated based on intra prediction type information, and the intra prediction type information may be implemented in various forms. For example, the intra prediction type information may include intra prediction type index information indicating one of the intra prediction types. As another example, the intra prediction type information may include at least one of reference sample line information (e.g., intra_luma_ref_idx) indicating whether the MRL is applied to the current block and, if applicable, which reference sample line is used, ISP flag information (e.g., Intra_subpartitions_mode_flag) indicating whether the ISP is applied to the current block, ISP type information (e.g., Intra_subpartitions_split_flag) indicating the split type of subpartitions when the ISP is applied, flag information indicating whether PDCP is applied, or flag information whether LIP is applied. In addition, the intra prediction type information may include a MIP flag (or referred to as intra _mip_flag) indicating whether MIP is applied to the current block.

**MRL (Multi-reference line) intra prediction**

FIG. 8 is a diagram showing multi-reference line for intra prediction according to an embodiment of the present disclosure.

In the conventional intra prediction, only the neighboring samples of the top first line and the left first line of the current block were used as reference samples for intra prediction. However, in the multiple-reference line (MRL) method, intra prediction may be performed using neighboring samples located on a sample line separated by one to three samples from the upper and/or left side of the current block as reference samples. Alternatively, intra prediction using the MRL method may be performed using, as reference samples, neighboring samples located at a sample separated by N samples from the upper and/or left side of the current block. FIG. 8 shows an example of the multi-reference line, where the multi-reference line index (e.g., mrl_idx) indicates which line is used for intra prediction with respect to the current block.

For example, the multi-reference line index may be signaled through coding unit syntax as shown in Table 2. The multi-reference line index may be configured in the form of an intra_luma_ref_idx syntax element.

[Table 2]

| |
|---|
| coding_unit( x0, y0, cbWidth, cbHeight, treeType ) { |
| if( slice_type != I) { |
| **cu_skip_flag**[ x0 ][ y0 ] |
| if( cu_skip_flag[ x0 ][ y0 ] = = 0 ) |
| **pred_mode_flag** |
| } |
| if( CuPredMode[ x0 ][ y0 ] == MODE_INTRA ) { |
| if( treeType = = SINGLE_TREE ‖ treeType = = DUAL_TREE_LUMA ) { |
| if( ( y0 % CtbSizeY ) > 0) |
| **intra_luma_ref_idx**[ x0 ][ y0 ] ... |
| if (intra_luma_ref_idx[ x0 ][ y0 ] = = 0) |

(continued)

| |
|---|
| **intra_luma_mpm_flag**[ x0 ][ y0 ] |
| if( intra_luma_mpm_flag[ x0 ][ y0 ] ) |
| **intra_luma_mpm_idx**[ x0 ][ y0 ] |
| Else |
| **intra_luma_mpm_remainder**[ x0 ][ y0 ] |
| } |
| ... |
| } |

intra_luma_ref_idx[x0][y0] may represent an intra reference line index IntraLumaRefLineIdx[x0][y0]. If intra_luma _ref_ idx[x0][y0] is not present, the value thereof may be inferred to be 0. intra_luma_ref_idx may be called (intra) reference sample line index or mrl_idx. Additionally, intra_luma_ref_idx may also be called intra_luma_ref_line_idx. Table 3 below shows the value of IntraLumaRefLineIdx[x0][y0] based on intra_luma_ref_idx[x0][y0].

[Table 3]

| intra_luma_ref_idx[ x0 ][ y0 ] | IntraLumaRefLineIdx[ x0 ][ y0 ] |
|---|---|
| 0 | 0 |
| 1 | 1 |
| 2 | 3 |

MRL may be disabled for blocks of the first line (row) in the CTU. That is, if the upper boundary of the current block is the boundary of the CTU, MRL may not be used for the current block. In Table 2, if the upper boundary of the current block is the boundary of the

CTU, intra_luma_ref_idx[x0][y0] is not present, and the value thereof is inferred to be 0. Therefore, the first reference line may be used for the current block. This is to prevent the use of extended reference lines outside the current CTU line. In addition, the aforementioned PDPC may be disabled when the above-described additional reference line is used.

### General prediction sample derivation for chroma component

When intra prediction is performed on a current block, prediction on a luma component block (luma block) and prediction on a chroma component block (chroma block) of the current block may be performed. In this case, the intra prediction mode for the chroma component (chroma block) may be set separately from the intra prediction mode for the luma component (luma block).

For example, the intra prediction mode for the chroma component may be indicated based on intra chroma prediction mode information, and the intra chroma prediction mode information may be signaled in the form of an intra _chroma_pred_mode syntax element. As an example, the intra chroma prediction mode information may indicate one of candidate modes including at least one of a planar mode, a DC mode, a vertical mode, a horizontal mode, a derived mode (DM), L_CCLM, T_CCLM, LT_CCLM, CCCM (Convolutional Cross-Component Model), CCCM_A, CCCM_L modes. DM may also be called direct mode. CCLM may be called LM.

The CCLM mode is an intra prediction mode using correlation between a luma block and a chroma block corresponding to the luma block, and may indicate a mode in which a linear model may be derived based on neighboring samples of the luma block and neighboring samples of the chroma block and prediction samples of the chroma block are derived based on the linear model and the reconstructed samples of the luma block. Specifically, when the CCLM mode is applied to the current chroma block, parameters for the linear model may be derived based on neighboring samples used for intra prediction of the current chroma block and neighboring samples used for intra prediction of the current luma block.

CCLM mode may be extended to MMLM mode. For example, three MMLM modes may be added. Neighboring samples reconstructed in each MMLM mode may be classified into two groups using a threshold. The threshold may be, for example, an average value of reconstructed luma samples. The linear model for each group may be derived using a Linear-Mean-Square (LMS) method. Even in CCLM mode, the LMS method may be used to derive a linear model.

When MMLM is used, there may be two or more linear models between luma samples and chroma samples in a CU. In this method, the neighboring luma samples and neighboring chroma samples of the current block may be classified into several groups. Additionally, each group may be used as a training set to derive a linear model. That is, CCLM parameters (e.g., $\alpha$ and/or $\beta$) may be derived for each group. Additionally, samples within the current luma block may be classified using the same method as the method for classifying neighboring luma samples.

In this method, neighboring samples may be classified into M groups. Here, M may be 2 or 3. When M is 2 or 3, the MMLM method may be designed with two additional chroma prediction modes, called MMLM2 and MMLM3, in addition to the original LM mode. The image encoding apparatus may select an optimal mode in the RDO process and signal that mode.

## Overview of convolutional cross-component model (CCCM)

Chroma samples may be predicted from reconstructed luma samples by applying a similar concept to that performed by the CCLM mode(s) described above. For example, when the CCCM prediction mode is performed, the reconstructed luma samples may be used to predict the chroma samples. When chroma subsampling is used, the reconstructed luma samples may be downsampled to match a low-resolution chroma grid (block). In addition, the CCCM mode may include a single model or a multi-model. Here, the multi-model may be a model that uses two models. One of the two models included in the multi-model may be applied to a sample having a value greater than or equal to an average value of luma reference samples. The other of the two models included in the multi-model may be applied to samples having a value less than the average value of the luma reference samples. Here, the luma reference samples may mean samples included in a luma reference area adjacent to a co-located luma block. The multi-model CCCM mode may be applied to a PU having at least 128 or more available reference samples. However, the present disclosure is not limited thereto, and the multi-model CCCM mode may be applied to a PU having less than 128 available reference samples. The number of available reference samples, which is a criterion for a PU to which the CCCM mode may be applied, is not limited to 128, and may be, for example, 256 or 64. Alternatively, the number of available reference samples may be determined differently depending on the size of the PU.

### Convolutional filter

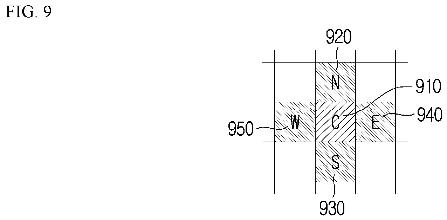

The proposed 7-tap filter in the CCCM prediction mode may be composed of a 5-tap filter, a nonlinear term, and a bias term. Here, the 5-tap filter may be a plus sign shaped spatial filter that uses neighboring luma samples present at plus-shaped positions based on the co-located luma sample in the co-located luma block. The components constituting the 5-tap filter will be described in detail with reference to FIG. 9 below.

FIG. 9 is a diagram illustrating a co-located luma sample and neighboring luma samples. Components constituting a 5-tap filter may be composed of a co-located luma sample (C) 910 corresponding to a prediction target chroma sample, a top/north (N) neighboring luma sample 920 of the co-located luma sample, a bottom/south (S) neighboring luma sample 930, a right/east (E) neighboring luma sample 940, and a left/west (W) neighboring luma sample 950.

A nonlinear term P, which is one of the components constituting the 7-tap filter, may be expressed as the square of the co-located luma sample value C, and may be scaled to the sample value range of the content. Equation 1 below may be an example of deriving the nonlinear term P. In addition, Equation 2 may be an example of deriving the nonlinear term P in the case of 10-bit content.

$$[\text{Equation 1}]$$

$$P = (\ C*C\ +\ midVal\ ) >> bitDepth$$

$$[\text{Equation 2}]$$

$$P = (\ C*C\ +\ 512\ ) >> 10$$

The bias term B, which is one of the components constituting the 7-tap filter, may be expressed as a scalar offset between the input and the output. This may be similar to the offset term of CCLM. In addition, the bias term B may be set to a median value of the chroma sample. For example, in the case of 10-bit content, the bias term B may be 512.

The output of the 7-tap filter may be calculated by a convolution between a filter coefficient Ci and an input value, and may be clipped to the range of valid chroma samples. Equation 3 below may be an example of deriving a prediction sample value of a chroma sample using a CCCM prediction mode.

[Equation 3]

$$predChromaVal = c_0C + c_1N + c_2S + c_3E + c_4W + c_5P + c_6B$$

**Calculation of CCCM filter coefficients**

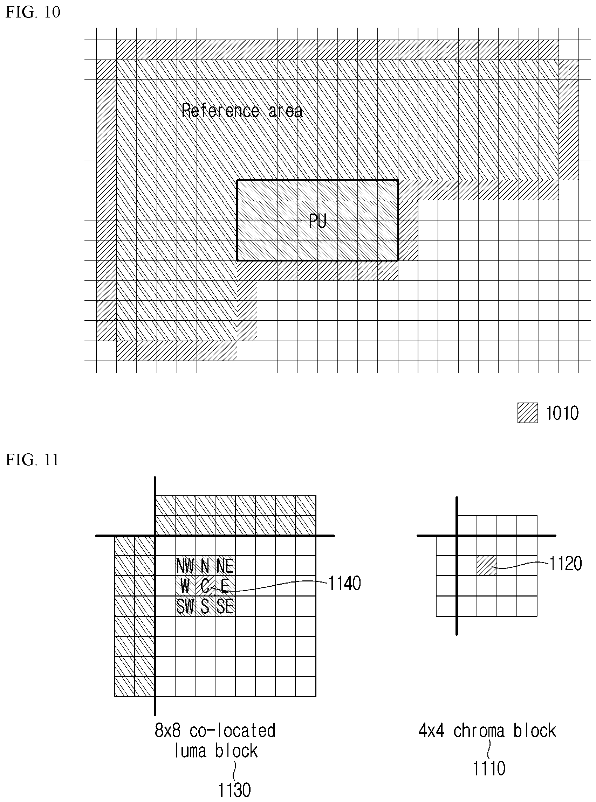

A filter coefficient Ci may be calculated by minimizing a Mean Square Error (MSE) between predicted chroma samples and reconstructed chroma samples in a reference area. Here, the MSE may be a function representing a difference value between the predicted chroma samples and the reconstructed chroma samples in the reference area. The 'filter coefficient' referred to in the present disclosure may be referred to as terms such as 'CCCM coefficient', 'CCCM filter coefficient', etc. Hereinafter, a method of calculating a filter coefficient will be described in detail with reference to FIG. 10.

FIG. 10 is a diagram illustrating a reference sample area of a chroma block for calculating a filter coefficient. FIG. 10 illustrates a reference area composed of chroma samples of six lines adjacent to the top of a current PU and chroma samples of six lines adjacent to the left. The reference area may be extended to the top right area of the PU boundary as much as the width of the PU. In addition, the reference area may be extended to the bottom left area of the PU boundary as much as the height of the PU. The reference area according to the present disclosure may be adjusted to include only available samples. As illustrated in FIG. 10, the reference area may be extended to have reference samples 1010. The extension of the reference area may be necessary to support side samples of the plus sign shaped spatial filter described above. In addition, the extended reference samples 1010 present in an unavailable area may be padded.

MSE minimization for the filter coefficients Ci may be performed by obtaining an autocorrelation matrix for luma input and calculating a cross-correlation vector between luma input and chroma output. The autocorrelation matrix may be decomposed using LDL decomposition, and a final filter coefficient may be calculated using back-substitution. This process may be identical to a calculation process of ALF (Adaptive Loop Filter) filter coefficients, but LDL decomposition may be chosen instead of Cholesky decomposition to avoid the use of square root operation. The proposed approach above may use only integer arithmetic.

**Bitstring signaling**

The use of the CCCM prediction mode may be signaled with a context-adaptive binary arithmetic coding (CABAC) coded PU level flag. A new CABAC context may be included to support this. When the CCCM flag is signaled, the CCCM prediction mode may be considered as a sub-mode of the CCLM prediction mode. That is, the CCCM flag may be signaled only when the intra prediction mode is LM _CHROMA _IDX (single-mode CCCM enabled) or MMLM_CHROMA_IDX (multi-mode CCCM enabled).

Hereinafter, an image encoding/decoding method according to an embodiment of the present disclosure will be described in detail.

The present disclosure relates to intra prediction. Specifically, the present disclosure relates to intra prediction of a chroma block and CCCM prediction mode. The CCCM prediction mode may be a mode in which prediction is performed through filtering using a co-located luma sample corresponding to a chroma sample and neighboring luma samples of the co-located luma sample. This may be similar to an ALF (Adaptive Loop Filter) and/or a CC-ALF (Cross Component Adaptive Loop Filter) method.

The CCCM prediction mode may utilize a CCCM coefficient calculated using reference sample lines of six neighboring lines of a current chroma block. The present disclosure may perform cross-component prediction using the CCCM coefficient.

According to the present disclosure, CCCM prediction can reduce high algorithmic complexity of existing CCCM prediction by reducing the number of filters. In addition, the present disclosure can perform improved CCCM prediction by utilizing neighboring luma samples of the co-located luma sample. In addition, the present disclosure can minimize reduction in encoding and decoding efficiency by applying various operations to the co-located luma sample and/or neighboring luma samples.

Embodiment 1

Hereinafter, a CCCM mode-based prediction method according to an embodiment of the present disclosure will be described. According to an embodiment of the present disclosure, prediction of a current chroma sample in a current chroma block may be performed based on a CCCM prediction mode. For CCCM prediction, the present disclosure may perform prediction of the current chroma sample using a co-located luma sample, neighboring luma samples, and/or CCCM coefficient of the current chroma sample. Hereinafter, a detailed description will be given with reference to FIG. 11.

FIG. 11 is a diagram illustrating a current chroma block and a co-located luma block for CCCM prediction. The present disclosure may utilize a co-located luma sample 1140 in a co-located luma block 1130 and neighboring luma samples (at least one of E, W, S, N, NW, NE, SW or SE) of the co-located luma sample to predict a current chroma sample 1120 present in a current chroma block 1110. More specifically, the present disclosure may utilize Equation 4 below to predict the current chroma sample 1120.

[Equation 4]

- C_neighbor = ( W + N + S + E + 2 ) >> 2

- P = ( C*C + midVal ) >> bitDepth (if bitdepth = 10, P = ( C*C + 512 ) >> 10)

- predChromaVal = $c_0$C + $c_1$C_neighbor + $c_2$P + $c_3$B

In Equation 4, the bias term B may represent a scalar offset between the input and the output, and may be set to a median value of a chroma value. This may be the same as the case of CCLM. For example, in the case of 10-bit content, the bias term B may be 512. In Equation 4, C_neighbor may mean an average value of four samples among the neighboring luma samples of the co-located luma sample 1140 of the current chroma sample 1120. For example, C_neighbor may mean an average value of the left, right, top, and bottom neighboring luma samples of the co-located luma sample 1140. According to one embodiment of the present disclosure, C_neighbor may mean an average value of at least one or more of the left, right, top, bottom, top-left, bottom-left, top-right, or bottom-right samples, and the present disclosure is not limited thereto.

P of Equation 4 is a nonlinear term, and midVal may mean the median pixel of a current image. For example, when a bitdepth is 10, the nonlinear term P may be calculated as follows.

$$P = (C*C + 512) >> 10$$

In addition, predChromaVal of Equation 4 may mean a chroma sample value predicted through CCCM prediction according to the present disclosure. That is, CCCM prediction may be performed using the co-located luma sample 1140 and the average value C_neighbor of four neighboring samples as in Equation 4. Accordingly, when performing CCCM prediction, a 4-tap filter may be used instead of the existing 7-tap filter. The present disclosure may reduce algorithmic computational complexity by reducing the number of CCCM coefficients.

According to another embodiment of the present disclosure, the present disclosure may use a 3-tap filter by removing the nonlinear term P as in Equation 5.

[Equation 5]

- predChromaVal = $c_0$C + $c_1$C_neighbor + $c_2$B

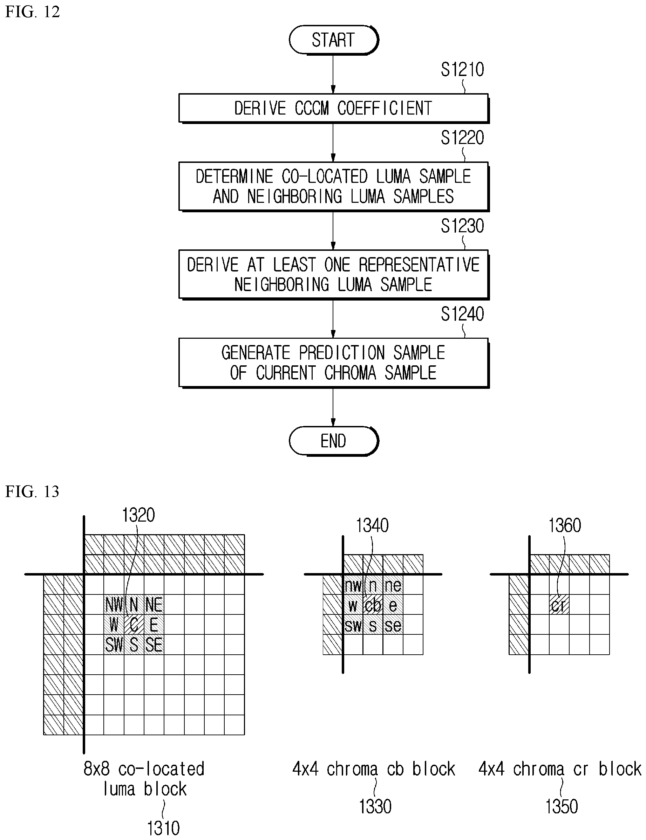

FIG. 12 is a flowchart illustrating a CCCM prediction method. The prediction method of FIG. 12 may correspond to step S410 of FIG. 4. In addition, the prediction method of FIG. 12 may correspond to steps S610 to S630 of FIG. 6. Referring to FIG. 12, the image decoding apparatus 200 may derive a CCCM coefficient (S1210). Specifically, if the intra prediction mode of the current chroma block is the CCCM mode, the image decoding apparatus 200 may derive the CCCM coefficient. At this time, the CCCM coefficient may be derived according to an embodiment of the CCCM prediction according to the present disclosure. For example, if the CCCM prediction is performed based on Equation 4 above, the derivation of the CCCM coefficient for the corresponding CCCM prediction may also be performed based on Equation 4 above. At this time, a reference chroma sample in a reference area adjacent to a current chroma block, a co-located reference luma sample corresponding to the reference chroma sample as a sample in a reference area adjacent to a luma block corresponding to the chroma block, and/or neighboring reference luma sample(s) adjacent to the co-located reference luma sample may be used.

The image decoding apparatus 200 may determine a co-located luma sample and neighboring luma samples (S1220). Here, the co-located luma sample may be a co-located luma sample in a luma block corresponding to a current chroma sample in a current chroma block. In addition, the neighboring luma samples may be samples adjacent to the co-located luma sample. Specifically, the neighboring luma samples may include at least one of the left, right, top, bottom, top-left, top-right, bottom-left, or bottom-right neighboring luma samples of the co-located luma sample.

The image decoding apparatus 200 may derive at least one representative neighboring luma sample (S1230). At this time, at least one representative neighboring luma sample may be derived based on the neighboring luma samples. Specifically, the representative neighboring luma sample may be derived based on the average value of the neighboring luma samples. Alternatively, the representative neighboring luma sample may be derived by downsampling the co-located luma sample and the neighboring luma samples.

The image decoding apparatus 200 may generate a prediction sample of the current chroma sample (S1240). Specifically, the image decoding apparatus 200 may generate a prediction sample of the current chroma sample based on the representative neighboring luma sample and the CCCM coefficient. For example, the prediction sample of the current chroma sample may be generated using Equation 4 or Equation 5.

Although various embodiments according to the present disclosure have been described as being performed in the image decoding apparatus 200, it is obvious to those skilled in the art that corresponding or identical operations may also be performed in the image encoding apparatus 100.

According to another embodiment of the present disclosure, the present disclosure may generate the prediction sample of the current chroma sample 1120 by using an average value C_neighbor of eight neighboring luma samples as in Equation 6. At this time, the eight neighboring luma samples may mean left, right, top, bottom, top-left, bottom-left, top-right, and bottom-right neighboring luma samples of the co-located luma sample 1140. In this case, the prediction sample of the current chroma sample 1120 may be generated using a 4-tap filter. Alternatively, by removing the nonlinear term P, the prediction sample of the current chroma sample 1120 may be generated using a 3-tap filter.

[Equation 6]

- $C\_neighbor = ( W + N + S + E + NW + NE + SW + SE + 4 ) >> 3$
- $P = ( C*C + midVal ) >> bitDepth$ (if bitdepth = 10, $P = ( C*C + 512 ) >> 10$)
- $predChromaVal = c_0 C + c_1 C\_neighbor + c_2 P + c_3 B$
- $predChromaVal = c_0 C + c_1 C\_neighbor + c_2 B$ (without non-linear term)

According to another embodiment of the present disclosure, the present disclosure may generate the prediction sample of the current chroma sample 1120 by using a weighted average value C_neighbor of eight neighboring luma samples as in Equation 7. In this case, the prediction sample of the current chroma sample 1120 may be generated by using a 4-tap filter. Alternatively, by removing the nonlinear term P, the prediction sample of the current chroma sample 1120 may be generated by using a 3-tap filter.

[Equation 7]

- $C\_neighbor = ( 3*W + 3*N + 3*S + 3*E + NW + NE + SW + SE + 8 ) >> 4$
- $P = ( C*C + midVal ) >> bitDepth$ (if bitdepth = 10, $P = ( C*C + 512 ) >> 10$)
- $predChromaVal = c_0 C + c_1 C\_neighbor + c_2 P + c_3 B$
- $predChromaVal = c_0 C + c_1 C\_neighbor + c_2 B$ (without non-linear term)

In Equation 7 above, the weights applied to the neighboring luma samples adjacent to the top, bottom, left, and right of the co-located luma sample may be set to be greater than the weights applied to the neighboring luma samples adjacent to the diagonal direction of the co-located luma sample. The weights or neighboring luma samples for the weighted average are not limited to the above example and may be changed in various ways.

According to another embodiment of the present disclosure, the present disclosure may generate the prediction sample of the current chroma sample 1120 by using a horizontal representative neighboring luma sample C_hor and a vertical representative neighboring luma sample C_ver, as in Equation 8. Here, the horizontal representative neighboring luma sample C_hor may mean an average value of a left neighboring luma sample and a right neighboring luma sample of a co-located luma sample. The vertical representative neighboring luma sample C_ver may mean an average value of a top neighboring luma sample and a bottom neighboring luma sample of the co-located luma sample. In this case, the prediction sample of the current chroma sample 1120 may be generated using a 5-tap filter. Alternatively, by removing the nonlinear term P, the prediction sample of the current chroma sample 1120 may be generated using a 4-tap filter.

[Equation 8]

- $C\_hor = ( W + E + 1 ) >> 2$
- $C\_ver = ( N + S + 1 ) >> 2$
- $P = ( C*C + midVal ) >> bitDepth$ (if bitdepth = 10, $P = ( C*C + 512 ) >> 10$)
- $predChromaVal = c_0 C + c_1 C\_hor + c_2 C\_ver + c_3 P + c_4 B$
- $predChromaVal = c_0 C + c_1 C\_hor + c_2 C\_ver + c_3 B$ (without non-linear term)

According to another embodiment of the present disclosure, the present disclosure may generate the prediction sample of the current chroma sample 1120 by using a downsampled value C_ds of the co-located luma sample and neighboring luma samples as in Equation 9. In this case, the prediction sample of the current chroma sample 1120 may be generated by using a 3-tap filter. Alternatively, by removing the nonlinear term P, the prediction sample of the current chroma sample 1120 may be generated by using a 2-tap filter.

[Equation 9]

- $C\_ds = ( 4*C + W + N + S + E + 4 ) >> 3$
- $P = ( C*C + midVal ) >> bitDepth$ (if bitdepth = 10, $P = ( C*C + 512 ) >> 10$)
- $predChromaVal = c_0 C\_ds + c_1 P + c_2 B$
- $predChromaVal = c_0 C\_ds + c_1 B$ (without non-linear term)

C_ds of Equation 9 may be a downsampled value of the co-located luma sample and the neighboring luma samples. According to embodiments of the present disclosure, the value of C_ds may be calculated using various combinations of neighboring luma samples as in the equations. The equations below are equations for calculating C_ds according to various embodiments of the present disclosure, and the present disclosure is not limited thereto and may calculate the value of C_ds using various combinations of neighboring luma samples.

-

$$C\_ds = (4*C + W + N + S + E + 4) >> 3$$

-

$$C\_ds = (4*C + 2*W + 2*N + 2*S + 2*E + NW + NE + SW + SE + 8) >> 4$$

-

$$C\_ds = (8*C + W + N + S + E + NW + NE + SW + SE + 8) >> 4$$

-

$$C\_ds = (2*C + 2*S + W + E + SW + SE + 4) >> 3$$

In order to calculate the value of C_ds, the weight applied to the co-located luma sample may be set to be greater than or equal to the weights applied to the neighboring luma samples adjacent to the top, bottom, left, and right of the co-located luma sample. In addition, the weights applied to the neighboring luma samples adjacent to the top, bottom, left, and right of the co-located luma sample may be set to be greater than or equal to the weights applied to the neighboring luma samples adj acent to the diagonal direction of the co-located luma sample.

According to another embodiment of the present disclosure, the weights applied to neighboring luma samples adjacent to the top, bottom, left, and right of the co-located luma sample may be different from each other. The weights or neighboring luma samples for the weighted average are not limited to the above example and may be variously changed.

According to another embodiment of the present disclosure, the present disclosure may generate the prediction sample of the current chroma sample 1120 using one neighboring luma sample C_1 as in Equation 10. In this case, the prediction sample of the current chroma sample 1120 may be generated using a 4-tap filter. Alternatively, by removing the nonlinear term P, the prediction sample of the current chroma sample 1120 may be generated using a 3-tap filter.

[Equation 10]

- $C\_1 = S$
- $P = ( C*C + midVal ) >> bitDepth$ (if bitdepth $= 10$, $P = ( C*C + 512 ) >> 10$)
- $predChromaVal = c_0C + c_1C\_1 + c_2P + c_3B$
- $predChromaVal = c_0C + c_1C\_1 + c_2B$ (without non-linear term)

At this time, C_1 may be a value of one of the neighboring luma samples, and the neighboring luma sample may be one of the left, right, top, bottom, top-left, top-right, bottom-left, or bottom-right neighboring luma samples of the co-located luma sample.

According to another embodiment of the present disclosure, the present disclosure may generate the prediction sample of the current chroma sample 1120 by using two neighboring luma samples C_1 and C_2 as in Equation 11. In this case, the prediction sample of the current chroma sample 1120 may be generated by using a 5-tap filter. Alternatively, by removing the nonlinear term P, the prediction sample of the current chroma sample 1120 may be generated by using a 4-tap filter.

[Equation 11]

- $C\_1 = S$
- $C\_2 = E$
- $P = ( C*C + midVal ) >> bitDepth$ (if bitdepth $= 10$, $P = ( C*C + 512 ) >> 10$)
- $predChromaVal = c_0C + c_1C\_1 + c_2C\_2 + c_3P + c_4B$
- $predChromaVal = c_0C + c_1C\_1 + c_2C\_2 + c_3B$ (without non-linear term)

At this time, the neighboring luma samples used to generate the prediction sample of the current chroma sample 1120 may be two samples of the left, right, top, bottom, top-left, top-right, bottom-left, or bottom-right neighboring luma samples of the co-located luma sample.

According to another embodiment of the present disclosure, the present disclosure may generate the prediction sample of the current chroma sample 1120 using three neighboring luma samples C_1, C_2 and C_3 as in Equation 12. In this case, the prediction sample of the current chroma sample 1120 may be generated using a 6-tap filter. Alternatively, by removing the nonlinear term P, the prediction sample of the current chroma sample 1120 may be generated using a 5-tap filter.

[Equation 12]

- $C\_1 = S$
- $C\_2 = E$
- $C\_3 = W$
- $P = ( C*C + midVal ) >> bitDepth$ (if bitdepth $= 10$, $P = ( C*C + 512 ) >> 10$)
- $predChromaVal = c_0C + c_1C\_1 + c_2C\_2 + c_3C\_2 + c_4P + c_5B$
- $predChromaVal = c_0C + c_1C\_1 + c_2C\_2 + c_3C\_2 + c_4B$ (without non-linear term)

At this time, the neighboring luma samples used to generate the prediction sample of the current chroma sample 1120 may be three samples of the left, right, top, bottom, top left, top right, bottom left or bottom right neighboring luma samples of the co-located luma sample.

The determination of the neighboring luma samples or the derivation of the representative neighboring luma samples according to the present disclosure may be performed based on side information signaled through a bitstream. Here, the side information may be a mode flag or an index, etc.

According to an embodiment of the present disclosure, computational complexity can be reduced by reducing the number of filters for CCCM prediction. That is, encoding/decoding efficiency can be improved by using fewer CCCM coefficients than conventional CCCM prediction methods.

Embodiment 2

According to the present disclosure, a 7-tap filter CCCM prediction method is proposed which utilizes more neighboring luma samples compared to conventional CCCM prediction. By utilizing more neighboring luma samples, the encoding efficiency of the CCCM prediction method according to the present disclosure can be improved.

According to an embodiment of the present disclosure, the prediction sample of the current chroma sample 1120 may be generated based on representative neighboring luma samples N_f, W_f, S_f, and E_f. Referring to Equation 13, the representative neighboring luma samples may include a top representative neighboring luma sample N_f, a bottom representative neighboring luma sample S_f, a left representative neighboring luma sample W_f, and a right representative neighboring luma sample E_f of the co-located luma sample.

[Equation 13]

- $N\_f = (2*N + NW + NE + 2 ) >> 2$
- $W\_f = (2*W + NW + SW + 2 ) >> 2$
- $S\_f = (2*S + SW + SE + 2 ) >> 2$
- $E\_f = (2*E + NE + SE + 2 ) >> 2$
- $P = ( C*C + midVal ) >> bitDepth$ (if bitdepth = 10, $P = ( C*C + 512 ) >> 10$)
- $predChromaVal = c_0C + c_1N\_f + c_2W\_f + c_3S\_f + c_4E\_f + c_5P + c_6B$
- $predChromaVal = c_0C + c_1N\_f + c_2W\_f + c_3S\_f + c_4E\_f + c_5B$ (without non-linear term)

Here, the top representative neighboring luma sample N_f may be an average value (or weighted average value) of at least one neighboring luma sample N, NW, NE adjacent to the top of the co-located luma sample 1140. The bottom representative neighboring luma sample S_f may be an average value (or weighted average value) of at least one neighboring luma sample S, SW, SE adjacent to the bottom of the co-located luma sample 1140. The left representative neighboring luma sample W_f may be an average value (or weighted average value) of at least one neighboring luma sample W, SW, NW adjacent to the left of the co-located luma sample 1140. The right representative neighboring luma sample E_f may be an average value (or weighted average value) of at least one neighboring luma sample E, NE, SE adjacent to the right of the co-located luma sample 1140.

The bias term B and the nonlinear term P according to the present disclosure may be the same as the bias term B and the nonlinear term P described in Embodiment 1. According to Equation 13, the prediction sample of the current chroma sample 1120 may be generated using a 7-tap filter. Alternatively, by removing the nonlinear term P, the prediction sample of the current chroma sample 1120 may be generated using a 6-tap filter.

According to another embodiment of the present disclosure, the prediction sample of the current chroma sample 1120 may be generated based on representative neighboring luma samples. Referring to Equation 14, the representative neighboring luma samples may include a horizontal representative neighboring luma sample C_hor, a vertical representative neighboring luma sample C_ver, a diagonal representative neighboring luma sample C_dia, and an anti-diagonal representative neighboring luma sample C_vdia of the co-located luma sample.

[Equation 14]

- $C\_hor = ( W + E + 1 ) >> 2$
- $C\_ver = ( N + S + 1 ) >> 2$
- $C\_dia = ( NW + SE + 1 ) >> 2$
- $C\_vdia = ( SW + NE + 1 ) >> 2$
- $P = ( C*C + midVal ) >> bitDepth$ (if bitdepth = 10, $P = ( C*C + 512 ) >> 10$)
- $predChromaVal = c_0C + c_1C\_hor + c_2C\_ver + c_3C\_dia + c_4C\_vdia + c_5P + c_6B$
- $predChromaVal = c_0C + c_1C\_hor + c_2C\_ver + c_3C\_dia + c_4C\_vdia + c_5B$ (without non-linear term)

Here, the horizontal representative neighboring luma sample C_hor may be an average value (or weighted average value) of at least one neighboring luma sample W, E that is horizontally adjacent to the co-located luma sample 1140. That is, the horizontal representative neighboring luma sample C_hor may be an average value (or weighted average value) of at least one neighboring luma sample among the left neighboring luma sample W or the right neighboring luma sample E of the co-located luma sample 1140. The vertical representative neighboring luma sample C_ver may be an average value (or weighted average value) of at least one neighboring luma sample N, S that is vertically adjacent to the co-located luma sample 1140. That is, the vertical representative neighboring luma sample C_ver may be an average value (or weighted average value) of at least one neighboring luma sample among the top neighboring luma sample N or the bottom neighboring luma sample S of the co-located luma sample 1140. The diagonal representative neighboring luma sample C_dia may be an average value (or weighted average value) of at least one neighboring luma sample NW, SE that is diagonally adjacent to the co-located luma sample 1140. That is, the diagonal representative neighboring luma sample C_dia may be an average value (or weighted average value) of at least one neighboring luma sample among the top-left neighboring luma sample NW or the bottom-right neighboring luma sample SE of the co-located luma sample 1140. The anti-diagonal representative neighboring luma sample C_vdia may be an average value (or weighted average value) of at least one neighboring luma sample NE, SW that is anti-diagonally adjacent to the co-located luma sample 1140. That is, the anti-diagonal representative neighboring luma sample (C_vdia) may be an average value (or weighted average value) of at least one neighboring luma sample among the top right neighboring luma sample NE or the bottom left neighboring luma sample SW of the co-located luma sample 1140.

The bias term B and the nonlinear term P according to the present disclosure may be the same as the bias term B and the nonlinear term P described in Embodiment 1. According to Equation 13, the prediction sample of the current chroma sample 1120 may be generated using a 7-tap filter. Alternatively, by removing the nonlinear term P, the prediction sample of the current chroma sample 1120 may be generated using a 6-tap filter.

According to an embodiment of the present disclosure, by considering all eight neighboring luma samples adjacent to the co-located luma sample 1140, the chroma sample prediction accuracy can be improved. The number of neighboring luma samples used in the embodiment of the present disclosure is not limited to eight. According to the present disclosure, for example, more neighboring luma samples may be used than the number of neighboring luma samples used conventionally (i.e., four).

The determination of the neighboring luma samples or the derivation of the representative neighboring luma samples according to the present disclosure may be performed based on side information signaled through a bitstream. Here, the side information may be a mode flag or an index, etc.

Embodiment 3

The CCCM prediction method according to an embodiment of the present disclosure may apply different CCCM coefficients to a chroma Cb block and a chroma Cr block. FIG. 13 is a diagram illustrating a chroma block and a luma block for CCCM prediction according to an embodiment of the present disclosure. Hereinafter, Equation 15 below will be described with reference to FIG. 13.

According to an embodiment of the present disclosure, prediction of a Cb sample 1340 in a current chroma Cb block 1330 and prediction of a Cr sample 1360 in a current chroma Cr block 1350 may be performed independently. That is, CCCM coefficients applied to the Cb sample 1340 and the Cr sample 1360 may be derived separately as in Equation 15.

[Equation 15]

$$P = ( C*C + midVal ) >> bitDepth \ (if\ bitdepth = 10,\ P = ( C*C + 512 ) >> 10)$$

$$predChromaVal\_cb = c_0C + c_1N + c_2S + c_3E + c_4W + c_5P + c_6B$$

$$predChromaVal\_cr = c_aC + c_bN + c_cS + c_dE + c_eW + c_fP + c_gB$$

The nonlinear term P and the bias term B of Equation 15 may be the same as the nonlinear term P and the bias term B described in Embodiment 1 above. The predChromaVal_cb of Equation 15 may mean a sample value of the Cb sample 1340 predicted through CCCM prediction. In addition, predChromaVal_cr may mean a sample value of the Cr sample 1360 predicted through CCCM prediction. $c_0$ to $c_6$ of Equation 15 may be CCCM coefficients for deriving a prediction value predChromaVal_cb of the Cb sample 1340. $c_a$ to $c_g$ of Equation 15 may be CCCM coefficients for deriving a prediction value predChromaVal_cr of the Cr sample 1360.

According to an embodiment of the present disclosure, CCCM coefficients $c_0$ to $c_6$ for the chroma Cb block 1330 may be calculated using luma reference samples and Cb reference samples. Additionally, CCCM coefficients $c_a$ to $c_g$ for the Cr block 1350 may be calculated using luma reference samples and Cr reference samples. Here, the Cb reference samples may be neighboring samples of the Cb sample 1340, and the Cr reference samples may be neighboring samples of the Cr sample 1360.

According to another embodiment of the present disclosure, when predicting the Cr sample 1360 in the chroma Cr block 1350, the Cb sample 1340 in the chroma Cb block 1330 and the neighboring samples n, s, w, e, nw, ne, sw and se of the Cb sample may be used. Referring to Equation 16, the sample value of the Cr sample 1360 may be calculated using the sample value of the Cb sample 1340 and the sample values of its neighboring samples. In this case, the CCCM coefficients for predicting the Cb sample 1340 and the CCCM coefficients for predicting the Cr sample 1360 may be different from each other.

[Equation 16]

- $P = ( C*C + midVal ) >> bitDepth$ (if bitdepth $= 10$, $P = ( C*C + 512 ) >> 10$)
- $predChromaVal\_cb = c_0C + c_1N + c_2S + c_3E + c_4W + c_5P + c_6B$
- $predChromaVal\_cr = c_acb + c_bn + c_cs + c_de + c_ew + c_fP + c_gB$

According to another embodiment of the present disclosure, the method proposed in the present embodiment may be applied to various color spaces such as RGB. Specifically, for the color plane on which the second encoding (decoding) is performed, CCCM prediction may be performed by referring to the first color plane on which encoding (decoding) is completed. For the color plane on which the third encoding (decoding) is performed, CCCM prediction may be performed by referring to the first or second color plane on which encoding (decoding) is completed. For example, in the case of the RGB color plane, since encoding (decoding) is performed in the order of GBR, CCCM prediction may be performed using the G color plane during B color plane encoding (decoding). In addition, CCCM prediction may be performed using the G color plane or the B color plane during R color plane encoding (decoding).

The method proposed in Embodiment 3 may be used in combination with the method of Embodiment 1 or Embodiment 2. For example, prediction of the Cb sample and the Cr sample may be performed using the average value C_neighbor of neighboring luma samples as in Equation 17.

[Equation 17]

- $C\_neighbor = ( W + N + S + E + 2 ) >> 2$
- $P = ( C*C + midVal ) >> bitDepth$ (if bitdepth $= 10$, $P = ( C*C + 512 ) >> 10$)
- $predChromaVal\_cb = c_0C + c_1C\_neighbor + c_2P + c_3B$
- $predChromaVal\_cr = c_aC + c_bC\_neighbor + c_cP + c_dB$

According to embodiments of the present disclosure, CCCM encoding performance can be improved by independently performing Cb sample prediction and Cr sample prediction.

The determination of neighboring luma samples or the derivation of representative neighboring luma samples according to the present disclosure may be performed based on side information signaled through a bitstream. Here, the side information may be a mode flag or an index, etc.

Embodiment 4

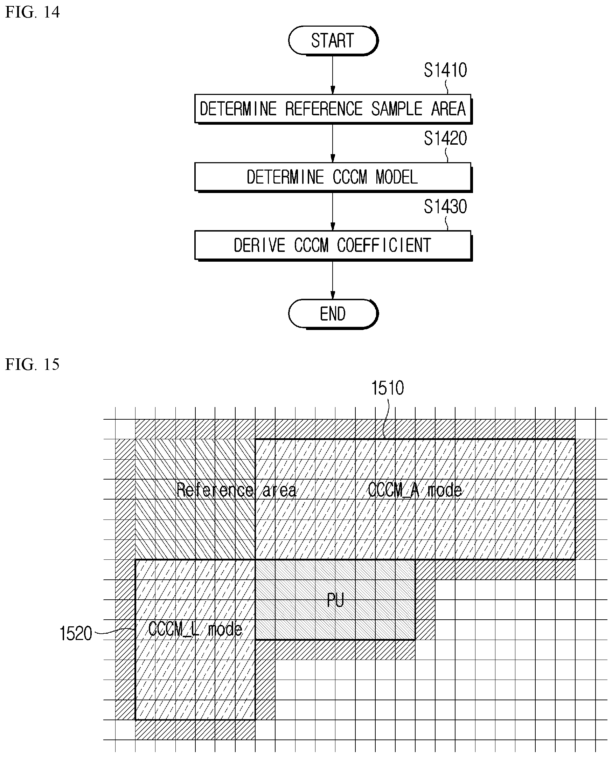

CCCM prediction according to an embodiment of the present disclosure may be performed using a multi-model. Specifically, the present disclosure may perform CCCM prediction using two or more sets of CCCM coefficients. That is, similar to the existing MMLM (Multi-Model Linear Mode), luma samples may be separated into two classes, and different CCCM coefficients may be applied to the luma samples of the two classes, respectively. In this case, CCCM calculation may be performed using six reference sample lines. Hereinafter, a detailed description will be given with reference to FIG. 14.

FIG. 14 is a flowchart of a CCCM coefficient derivation method according to an embodiment of the present disclosure. The CCCM coefficient derivation method of FIG. 14 may correspond to step S410 of FIG. 4. In addition, the CCCM coefficient derivation method of FIG. 14 may correspond to steps S610 to S630 of FIG. 6. Referring to FIG. 14, the image decoding apparatus 200 may determine a reference sample area (S1410). Thereafter, the image decoding apparatus 200 may determine a CCCM model (S1420). Specifically, the image decoding apparatus 200 may determine one CCCM model among two or more CCCM models based on at least one reference sample in the reference sample area. For example, the determination of the CCCM model may be performed by comparing an average value of at least one reference sample in the reference sample area and a predetermined threshold. As another example, the determination of the CCCM model may be performed by comparing the average value of at least one reference sample in the reference sample area and the sample value of the co-located luma sample.

The image decoding apparatus 200 may derive a CCCM coefficient (S1430). Specifically, the image decoding apparatus 200 may derive the CCCM coefficient for the determined CCCM model. At this time, the CCCM coefficient may be derived according to an embodiment of CCCM prediction according to the present disclosure. For example, when the CCCM prediction is performed based on Equation 18 below, the derivation of the CCCM coefficients for the corresponding CCCM prediction may also be performed based on Equation 18 below. At this time, a reference chroma sample in a reference area adjacent to a current chroma block, a co-located reference luma sample corresponding to the reference chroma sample as a sample in a reference area adjacent to a luma block corresponding to the chroma block, and/or neighboring reference luma sample(s) adjacent to the co-located reference luma sample may be used. Hereinafter, this will be described with reference to Equation 18 below.

[Equation 18]

$$- \quad P = ( C*C + \text{midVal} ) >> \text{bitDepth (if bitdepth} = 10, P = ( C*C + 512 ) >> 10)$$

$$- \quad \text{predChromaVal} = \text{if } C\_avg >= \text{threshold } ? \ c_0 C + c_1 N + c_2 S + c_3 E + c_4 W + c_5 P + c_6 B$$

$$\text{else, } c_a C + c_b N + c_c S + c_d E + c_e W + c_f P + c_g B$$

The nonlinear term P and the bias term B of Equation 18 may be the same as the nonlinear term P and the bias term B described in Embodiment 1 above. C_avg of Equation 18 may mean an average value of the sample values of the luma samples present in the reference sample area for calculating the CCCM coefficients. Referring to Equation 18, when C_avg is greater than or equal to a predetermined threshold, prediction for the current chroma sample may be performed using the CCCM coefficients $c_0$ to $c_6$. On the other hand, when C_avg is less than the predetermined threshold, prediction for the current chroma sample may be performed using the CCCM coefficients $c_a$ to $c_g$.

As another example, if the co-located luma sample value of the current chroma sample to be predicted is greater than or equal to C_avg, prediction for the current chroma sample may be performed using CCCM coefficients $c_0$ to $c_6$. On the other hand, if the co-located luma sample value of the current chroma sample to be predicted is less than C_avg, prediction for the current chroma sample may be performed using CCCM coefficients $c_a$ to $c_g$.

Although various embodiments according to the present disclosure have been described as being performed in the image decoding apparatus 200, it is obvious to those skilled in the art that corresponding or identical operations may also be performed in the image encoding apparatus 100.

The CCCM prediction method according to embodiments of the present disclosure can improve encoding performance by performing CCCM prediction by division into two models.

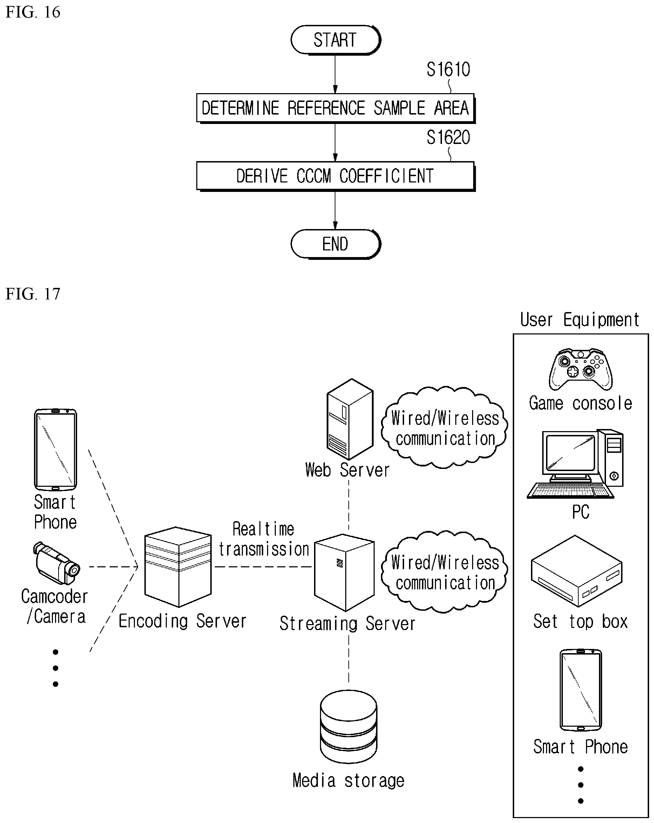

According to another embodiment of the present disclosure, the reference sample area for calculating the CCCM coefficient may be partially used. As in the MDLM (Mode-Dependent Linear Mode), the CCCM coefficient may be calculated using only the top reference sample area or the left reference sample area of the current chroma block and the current luma block. Here, the MDLM mode may mean a CCLM mode in which the LM_A mode for deriving linear model parameters based on top neighboring samples and the LM_L mode for deriving linear model parameters based on left neighboring samples are supported. This will be described below with reference to FIGS. 15 and 16.

FIG. 15 is a diagram illustrating a reference sample area according to an embodiment of the present disclosure. FIG. 16 is a flowchart of a CCCM coefficient derivation method according to an embodiment of the present disclosure. The CCCM coefficient derivation method of FIG. 16 may correspond to step S410 of FIG. 4. In addition, the CCCM coefficient derivation method of FIG. 16 may correspond to steps S610 to S630 of FIG. 6. Referring to FIG. 16, the image decoding apparatus 200 may determine a reference sample area (S1610). Thereafter, the image decoding apparatus 200 may derive a CCCM coefficient (S1620). Specifically, the image decoding apparatus 200 may derive the CCCM coefficient using at least one reference sample in the reference sample area. At this time, the reference sample area may be determined based on information about the CCCM mode. Here, the CCCM mode may include one of the CCCM _A mode or the CCCM_L mode. Information about the CCCM mode may be a mode flag or index signaled via a bitstream.

CCCM_A mode may be a mode in which the CCCM coefficient is calculated using only an area 1510 adjacent to the top of the current chroma block and the current luma block. CCCM_L mode may be a mode in which the CCCM coefficient is calculated using only an area 1520 adjacent to the left of the current chroma block and the current luma block.

According to another embodiment of the present disclosure, the image decoding apparatus 200 may calculate the CCCM coefficient by using all areas adjacent to the top and left of the current chroma block and the current luma block. That is, the image decoding apparatus 200 may calculate the CCCM coefficient by using at least one reference sample present in the area adjacent to the top or left of the current chroma block and the current luma block.

In a method according to an embodiment of the present disclosure, the reference sample area may limit the number of reference lines using a CTU boundary as a boundary. Specifically, the number of reference samples or the number of reference lines may be limited so that the number of reference samples is 2 to the power of N (e.g., 2, 4, 8, 16, 32, 64, 128, 256, 512, 1024, 2048, 4096).

Although various embodiments according to the present disclosure have been described as being performed in the image decoding apparatus 200, it is obvious to those skilled in the art that corresponding or identical operations may also be performed in the image encoding apparatus 100.

The CCCM prediction method according to the embodiments of the present disclosure can improve encoding performance by adaptively performing CCCM prediction according to the CCCM mode. That is, the CCCM prediction method according to the embodiments of the present disclosure can improve encoding performance by performing CCCM prediction by dividing a reference area for CCCM prediction into two areas according to the CCCM mode.

The determination of neighboring luma samples or the derivation of representative neighboring luma samples according to the present disclosure may be performed based on side information signaled through a bitstream. Here, the side information may be a mode flag or an index, etc.

Embodiments according to the present disclosure have been described in terms of CCCM prediction or derivation of the CCCM coefficient. However, it is obvious to those skilled in the art that CCCM prediction and derivation of the CCCM coefficient required for the CCCM prediction may be performed by the same method. However, derivation of the CCCM coefficient may be performed using samples in a reference area adjacent to a current chroma block and samples in a reference area adjacent to a co-located luma block. In addition, CCCM prediction may be performed using co-located luma samples and neighboring luma samples in a luma block corresponding to the current chroma block.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

FIG. 17 is a view showing a content streaming system, to which an embodiment of the present disclosure is applicable.

As shown in FIG. 17, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   deriving a convolutional cross-component model (CCCM) coefficient based on an intra prediction mode of a current chroma block being a CCCM mode;
   determining a co-located luma sample in a co-located luma block corresponding to a current chroma sample in the current chroma block and neighboring luma samples of the co-located luma sample;
   deriving at least one representative neighboring luma sample based on the neighboring luma samples; and
   generating a prediction sample of the current chroma sample based on the representative neighboring luma sample and the CCCM coefficient.

2. The image decoding method of claim 1, wherein the neighboring luma samples include at least one of left, right, top, bottom, top-left, top-right, bottom-left or bottom-right neighboring luma samples of the co-located luma sample.

3. The image decoding method of claim 1, wherein the representative neighboring luma sample is derived based on an average of the neighboring luma samples.

4. The image decoding method of claim 1, wherein the representative neighboring luma sample is derived by downsampling using the co-located luma sample and the neighboring luma samples.

5. The image decoding method of claim 1, wherein the determination of the neighboring luma samples or the derivation of the representative neighboring luma sample is performed based on side information signaled through a bitstream.

6. The image decoding method of claim 1,

   wherein the representative neighboring luma sample includes a top representative neighboring luma sample, a bottom representative neighboring luma sample, a left representative neighboring luma sample, and a right representative neighboring luma sample of the co-located luma sample,
   wherein the top representative neighboring luma sample is derived based on at least one neighboring luma sample adjacent to the top of the co-located luma sample,
   wherein the bottom neighboring luma sample is derived based on at least one neighboring luma sample adjacent to the bottom of the co-located luma sample,
   wherein the left representative neighboring luma sample is derived based on at least one neighboring luma sample adjacent to the left of the co-located luma sample, and

wherein the right representative neighboring luma sample is derived based on at least one neighboring luma sample adjacent to the right of the co-located luma sample.

7. The image decoding method of claim 1,

wherein the representative neighboring luma sample includes a horizontal representative neighboring luma samples, a vertical representative neighboring luma sample, a diagonal representative neighboring luma sample and an anti-angle representative neighboring luma sample,
wherein the horizontal representative neighboring luma sample is derived based on at least one neighboring luma sample horizontally adjacent to the co-located luma sample,
wherein the vertical representative neighboring luma sample is derived based on at least one neighboring luma sample vertically adjacent to the co-located luma sample,
wherein the diagonal representative neighboring luma sample is derived based on at least one neighboring luma sample diagonally adjacent to the co-located luma sample, and
wherein the anti-diagonal representative neighboring luma sample is derived based on at least one neighboring luma sample anti-diagonally adjacent to the co-located luma sample.

8. The image decoding method of claim 1,

wherein the current chroma block includes a first chroma block and a second chroma block, and
wherein the CCCM coefficient for the first chroma block is derived independently from the CCCM coefficient for the second chroma block.

9. The image decoding method of claim 1,

wherein the current chroma block includes a first chroma block and a second chroma block,
wherein CCCM prediction for the first chroma block is performed based on the co-located luma block, and
wherein CCCM prediction for the second chroma block is performed based on the first chroma block.

10. The image decoding method of claim 1, wherein the deriving the CCCM coefficient comprises:

determining a reference sample area; and
deriving a CCCM coefficient using at least one reference sample in the reference sample area, and
wherein the reference sample area is determined based on information about a CCCM mode.

11. The image decoding method of claim 10,

wherein the CCCM mode includes a first mode and a second mode,
wherein the first mode is a mode that uses only an area adjacent to the top of the current chroma block and the co-located luma block as the reference sample area, and
wherein the second mode is a mode that uses only an area adjacent to the left of the current chroma block and the co-located luma block as the reference sample area.

12. An image encoding method performed by an image encoding apparatus, the image encoding method comprising:

deriving a convolutional cross-component model (CCCM) coefficient based on an intra prediction mode of a current chroma block being a CCCM mode;
determining a co-located luma sample in a co-located luma block corresponding to a current chroma sample in the current chroma block and neighboring luma samples of the co-located luma sample;
deriving at least one representative neighboring luma sample based on the neighboring luma samples; and
generating a prediction sample of the current chroma sample based on the representative neighboring luma sample and the CCCM coefficient.

13. A method of transmitting a bitstream generated by an image encoding method, the image encoding method comprising:

deriving a convolutional cross-component model (CCCM) coefficient based on an intra prediction mode of a current chroma block being a CCCM mode;

determining a co-located luma sample in a co-located luma block corresponding to a current chroma sample in the current chroma block and neighboring luma samples of the co-located luma sample;

deriving at least one representative neighboring luma sample based on the neighboring luma samples; and

generating a prediction sample of the current chroma sample based on the representative neighboring luma sample and the CCCM coefficient.

FIG. 1

FIG. 2

FIG. 3

FIG. 4

```
            ┌─────────────┐
            │    START    │
            └──────┬──────┘
                   │
                   ▼                          S410
  ┌─────────────────────────────────────────┐
  │      PERFORM PREDICTION (DETERMINE       │
  │   INTRA PREDICTION MODE/TYPE, DERIVE      │
  │      NEIGHBORING REFERENCE SAMPLES,       │
  │    AND GENERATE PREDICTION SAMPLES)       │
  └─────────────────────┬─────────────────────┘
                        │
                        ▼                     S420
  ┌─────────────────────────────────────────┐
  │     RESIDUAL PROCESSING (DERIVE RESIDUAL  │
  │    SAMPLES ON BASIS OF PREDICTION SAMPLES)│
  └─────────────────────┬─────────────────────┘
                        │
                        ▼                     S430
  ┌─────────────────────────────────────────┐
  │      ENCODE IMAGE/VIDEO INFORMATION       │
  │     INCLUDING PREDICTION INFORMATION      │
  │        AND RESIDUAL INFORMATION           │
  └─────────────────────┬─────────────────────┘
                        │
                        ▼
               ┌─────────────┐
               │     END     │
               └─────────────┘
```

FIG. 5

```
                                           185
              ┌──────────────────────────────┐
              │                          186 │
              │    ┌───────────────────┐      │
ORIGINAL      │    │ INTRA PREDICTION  │      │   INTRA PREDICTION
PICTURE       │    │     MODE/TYPE     │      │   MODE/TYPE INFORMATION
──────────────┼───▶│ DETERMINATION UNIT│      ├──────────────────────▶
              │    └───────────────────┘      │
              │                          187  │
              │    ┌───────────────────┐      │
              │    │ REFERENCE SAMPLE  │      │
RECONSTRUCTED │    │  DERIVATION UNIT  │      │   PREDICTION SAMPLE(S)
REFERENCE     │    └───────────────────┘      │
REGION IN     │                          188  ├──────────────────────▶
CURRENT       │    ┌───────────────────┐      │
PICTURE       │    │ PREDICTION SAMPLE │      │
──────────────┼───▶│  DERIVATION UNIT  │      │
              │    └───────────────────┘      │
              └──────────────────────────────┘
                    INTRA PREDICTION UNIT
```

FIG. 6

```
                    ┌─────────┐
                    │  START  │
                    └────┬────┘
                         │                    S610
         ┌───────────────▼─────────────────┐
         │ DETERMINE INTRA PREDICTION MODE/TYPE │
         │    FOR CURRENT BLOCK ON BASIS OF  │
         │    RECEIVED PREDICTION INFORMATION │
         └───────────────┬─────────────────┘
                         │                    S620
         ┌───────────────▼─────────────────┐
         │ DERIVE NEIGHBORING REFERENCE SAMPLES │
         └───────────────┬─────────────────┘
                         │                    S630
         ┌───────────────▼─────────────────┐
         │        PERFORM PREDICTION         │
         │    (GENERATE PREDICTION SAMPLES)  │
         └───────────────┬─────────────────┘
                         │                    S640
         ┌───────────────▼─────────────────┐
         │      DERIVE RESIDUAL SAMPLES ON   │
         │     BASIS OF RESIDUAL INFORMATION │
         └───────────────┬─────────────────┘
                         │                    S650
         ┌───────────────▼─────────────────┐
         │      GENERATE RECONSTRUCTED       │
         │ BLOCK/PICTURE ON BASIS OF PREDICTION │
         │   SAMPLES AND RESIDUAL SAMPLES    │
         └───────────────┬─────────────────┘
                         │
                    ┌────▼────┐
                    │   END   │
                    └─────────┘
```

FIG. 7

265

266

INTRA PREDICTION
MODE/TYPE INFORMATION

INTRA PREDICTION
MODE/TYPE
DETERMINATION UNIT

267

PREDICTION SAMPLE

REFERENCE SAMPLE
DERIVATION UNIT

RECONSTRUCTED REFERENCE
REGION IN CURRENT PICTURE

268

PREDICTION SAMPLE
DERIVATION UNIT

INTRA PREDICTOR

FIG. 8

Segment D     Segment E     Segment F

Segment C

Reference line3
Reference line2
Reference line1
Reference line0

Block unit

Segment B

Segment A

FIG. 9

FIG. 10

Reference area

PU

1010

FIG. 11

| NW | N | NE |
| W | C | E |
| SW | S | SE |

1140

8x8 co-located
luma block

1130

1120

4x4 chroma block

1110

FIG. 12

```
                    ┌──────────┐
                    │  START   │
                    └────┬─────┘
                         │              S1210
        ┌────────────────▼────────────────┐
        │     DERIVE CCCM COEFFICIENT      │
        └────────────────┬────────────────┘
                         │              S1220
        ┌────────────────▼────────────────┐
        │  DETERMINE CO-LOCATED LUMA SAMPLE │
        │   AND NEIGHBORING LUMA SAMPLES    │
        └────────────────┬────────────────┘
                         │              S1230
        ┌────────────────▼────────────────┐
        │ DERIVE AT LEAST ONE REPRESENTATIVE│
        │     NEIGHBORING LUMA SAMPLE       │
        └────────────────┬────────────────┘
                         │              S1240
        ┌────────────────▼────────────────┐
        │     GENERATE PREDICTION SAMPLE    │
        │     OF CURRENT CHROMA SAMPLE      │
        └────────────────┬────────────────┘
                         │
                    ┌────▼─────┐
                    │   END    │
                    └──────────┘
```

FIG. 13

8x8 co-located luma block
1310

4x4 chroma cb block
1330

4x4 chroma cr block
1350

FIG. 14

```
         ┌──────────┐
         │  START   │
         └────┬─────┘
              │                       S1410
    ┌─────────▼─────────────────────┐
    │ DETERMINE REFERENCE SAMPLE AREA │
    └─────────┬─────────────────────┘
              │                       S1420
    ┌─────────▼─────────────────────┐
    │      DETERMINE CCCM MODEL       │
    └─────────┬─────────────────────┘
              │                       S1430
    ┌─────────▼─────────────────────┐
    │     DERIVE CCCM COEFFICIENT     │
    └─────────┬─────────────────────┘
              │
         ┌────▼─────┐
         │   END    │
         └──────────┘
```

FIG. 15

FIG. 16

```
        ┌─────────────┐
        │    START    │
        └──────┬──────┘
               │            S1610
        ┌──────▼───────────────────────┐
        │ DETERMINE REFERENCE SAMPLE AREA │
        └──────┬───────────────────────┘
               │            S1620
        ┌──────▼───────────────────────┐
        │    DERIVE CCCM COEFFICIENT    │
        └──────┬───────────────────────┘
               │
        ┌──────▼──────┐
        │     END     │
        └─────────────┘
```

FIG. 17

## INTERNATIONAL SEARCH REPORT

| International application No. |
|---|
| **PCT/KR2023/005372** |

### A. CLASSIFICATION OF SUBJECT MATTER

**H04N 19/593**(2014.01)i; **H04N 19/176**(2014.01)i; **H04N 19/11**(2014.01)i; **H04N 19/132**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/593(2014.01); H04N 19/105(2014.01); H04N 19/119(2014.01); H04N 19/132(2014.01); H04N 19/59(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 크로마(chroma), 인트라(intra), 예측(predict), 계수(coefficient), CCCM(convolutional cross-component model)

### C. DOCUMENTS CONSIDERED TO BE RELEVANT

| Category* | Citation of document, with indication, where appropriate, of the relevant passages | Relevant to claim No. |
|---|---|---|
| Y | ASTOLA, Pekka et al. AHG12: Convolutional cross-component model (CCCM) for intra prediction. JVET-Z0064-v1, Joint Video Experts Team (JVET) of ITU-T SG 16 WP 3 and ISO/IEC JTC 1/SC 29, 26th Meeting, by teleconference. pp. 1-5, 13 April 2022.<br>See pages 1-4; and figures 1-2. | 1-13 |
| Y | KR 10-2019-0140820 A (KWANGWOON UNIVERSITY INDUSTRY-ACADEMIC COLLABORATION FOUNDATION) 20 December 2019 (2019-12-20)<br>See paragraphs [0002], [0050]-[0053], [0061] and [0099]-[0114]; claim 6; and figures 2 and 5-7. | 1-13 |
| A | KR 10-2022-0030950 A (GUANGDONG OPPO MOBILE TELECOMMUNICATIONS CORP., LTD.) 11 March 2022 (2022-03-11)<br>See claims 1-11. | 1-13 |
| A | KR 10-2020-0028856 A (KIM, Kibaek) 17 March 2020 (2020-03-17)<br>See claims 1-3. | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005372**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0043482 A (ELECTRONICS AND TELECOMMUNICATIONS RESEARCH INSTITUTE) 26 April 2019 (2019-04-26)<br>See claims 1-10. | 1-13 |

Form PCT/ISA/210 (second sheet) (July 2022)

INTERNATIONAL SEARCH REPORT
Information on patent family members

International application No.

**PCT/KR2023/005372**

| Patent document cited in search report | | | Publication date (day/month/year) | Patent family member(s) | | | Publication date (day/month/year) |
|---|---|---|---|---|---|---|---|
| KR | 10-2019-0140820 | A | 20 December 2019 | KR | 10-2022-0051156 | A | 26 April 2022 |
| | | | | KR | 10-2389267 | B1 | 20 April 2022 |
| KR | 10-2022-0030950 | A | 11 March 2022 | CN | 114041288 | A | 11 February 2022 |
| | | | | EP | 3972251 | A1 | 23 March 2022 |
| | | | | JP | 2022-539786 | A | 13 September 2022 |
| | | | | US | 2022-0116591 | A1 | 14 April 2022 |
| | | | | WO | 2021-004152 | A1 | 14 January 2021 |
| KR | 10-2020-0028856 | A | 17 March 2020 | CN | 113225557 | A | 06 August 2021 |
| | | | | EP | 3833021 | A1 | 09 June 2021 |
| | | | | JP | 2022-501881 | A | 06 January 2022 |
| | | | | US | 11477439 | B2 | 18 October 2022 |
| | | | | US | 2023-0026704 | A1 | 26 January 2023 |
| | | | | WO | 2020-050684 | A1 | 12 March 2020 |
| KR | 10-2019-0043482 | A | 26 April 2019 | CN | 111247799 | A | 05 June 2020 |
| | | | | CN | 111247799 | B | 09 August 2022 |
| | | | | CN | 115022632 | A | 06 September 2022 |
| | | | | CN | 115037931 | A | 09 September 2022 |
| | | | | CN | 115037932 | A | 09 September 2022 |
| | | | | EP | 3700208 | A1 | 26 August 2020 |
| | | | | EP | 3700208 | A4 | 07 April 2021 |
| | | | | KR | 10-2023-0038168 | A | 17 March 2023 |
| | | | | US | 11375185 | B2 | 28 June 2022 |
| | | | | US | 2020-0244956 | A1 | 30 July 2020 |
| | | | | US | 2022-0279174 | A1 | 01 September 2022 |
| | | | | WO | 2019-078629 | A1 | 25 April 2019 |

Form PCT/ISA/210 (patent family annex) (July 2022)